# FASCICULE DE BREVET EUROPEEN

(11) **EP 4 151 846 B1**
(45) Date de publication et mention de la délivrance du brevet: **21.05.2025**
(21) Numéro de dépôt: 22195169.2
(22) Date de dépôt: 12.09.2022
(51) Int. Cl.: F02C 7/32, F02C 7/36, F16H 1/28, F16H 57/08

(54) **TURBOMACHINE D'AERONEF**
TURBOMASCHINE EINES LUFTFAHRZEUGS
AIRCRAFT TURBINE ENGINE

(30) Priorité: 21.09.2021 FR 2109922
(43) Date de publication de la demande: 22.03.2023
(73) Titulaire: Safran Transmission Systems, 92700 Colombes (FR)
(72) Inventeur: MOULY,, Guillaume Pierre, 77550 MOISSY-CRAMAYEL (FR); SIMON,, Adrien Louis, 77550 MOISSY-CRAMAYEL (FR); BECK,, Guillaume Julien, 77550 MOISSY-CRAMAYEL (FR); LEFEBVRE,, Simon Loïc Clément, 77550 MOISSY-CRAMAYEL (FR)
(74) Mandataire: Gevers & Orès

(56) Documents cités:
- EP-A1- 3 859 134
- US-A1- 2015 354 672
- US-B2- 9 797 470

## Description

### Domaine technique de l'invention

La présente invention concerne une turbomachine comportant un module de transmission de puissance.

### Arrière-plan technique

L'état de l'art comprend notamment les documents WO-A1-2010/092263, FR-A1-2 987 416, FR-A1-3 008 462, FR-A1-3 008 463, FR-A1-3 041 054, EP-A1-3 859 134, US-B2-9,797,470 et US-A1-2015/354672, ce dernier décrivant un module de transmission de puissance pour une turbomachine d'aéronef, comprenant :- une entrée de couple configurée pour être reliée à un arbre de turbine, - une première sortie de couple , et- une seconde sortie de couple ,ce module de transmission de puissance comportant un réducteur mécanique comprenant un solaire, formant ladite entrée de couple, et des satellites portés par un porte-satellites, chacun de ces satellites comportant une première denture engrenée avec le solaire où chacun des satellites comprend au moins trois dentures indépendantes et comporte :- une deuxième denture engrenée avec un élément formant l'une des première et seconde sorties de couple et une troisième denture engrenée avec un autre élément, cet autre élément formant l'autre des première et seconde sorties de couple lorsque ledit porte-satellites est fixe, ou cet autre élément étant une couronne fixe lorsque ledit porte-satellites est mobile et forme l'autre des première et seconde sorties de couple.

Les nouvelles générations de turbomachines à double flux, notamment celles ayant un haut taux de dilution, comportent un réducteur mécanique pour entraîner l'arbre d'une hélice de soufflante (aussi appelé « fan »). De manière usuelle, le réducteur a pour but de transformer la vitesse de rotation dite rapide de l'arbre d'une turbine de puissance en une vitesse de rotation plus lente pour l'arbre entraînant l'hélice de soufflante.

Un tel réducteur comprend en général un pignon central, appelé solaire, une couronne et des pignons appelés satellites, qui sont en prise entre le solaire et la couronne. Les satellites sont maintenus par un châssis appelé porte-satellites. Le solaire, la couronne et le porte-satellites sont des planétaires car leurs axes de révolution coïncident avec l'axe longitudinal X de la turbomachine. Les satellites ont chacun un axe de révolution différent et sont équirépartis sur le même diamètre de fonctionnement autour de l'axe des planétaires. Ces axes sont parallèles à l'axe longitudinal X.

Il existe plusieurs architectures de réducteur. Dans l'état de l'art des turbomachines à double flux, les réducteurs sont de type planétaire ou épicycloïdal. Il existe dans d'autres applications similaires, des architectures dites différentielles ou « compound ».
- Sur un réducteur planétaire, le porte-satellites est fixe et la couronne constitue l'arbre de sortie du dispositif qui tourne dans le sens inverse du solaire.
- Sur un réducteur épicycloïdal, la couronne est fixe et le porte-satellites constitue l'arbre de sortie du dispositif qui tourne dans le même sens que le solaire.
- Sur un réducteur différentiel, aucun élément n'est fixé en rotation. La couronne tourne dans le sens contraire du solaire et du porte-satellites.

Les réducteurs peuvent être composés d'un ou plusieurs étages d'engrènement. Cet engrènement est assuré de différentes façons comme par contact, par friction ou encore par champs magnétique.

Dans la présente demande, on entend par « étage » ou « denture », au moins une série de dents d'engrènement avec au moins une série de dents complémentaires. Une denture peut être interne ou externe.

Un satellite peut comprendre un ou deux étages d'engrènement. Un satellite à simple étage comprend une denture qui peut être droite, hélicoïdale ou en chevron et dont les dents sont situées sur un même diamètre. Cette denture coopère à la fois avec le solaire et la couronne.

Un satellite à double étage comprend deux dentures qui sont situées sur des diamètres différents. Une première denture coopère avec le solaire et une seconde denture coopère en général avec la couronne.

Les nouvelles générations de turbomachines peuvent comprendre un réducteur mécanique qui entraîne l'hélice de soufflante ainsi qu'une autre hélice assimilable à une plus petite soufflante ou à une soufflante secondaire. Le réducteur fait partie d'un module de transmission de puissance qui est utilisé pour entrainer en rotation d'une part l'arbre de la soufflante principale et pour entraîner d'autre part l'arbre de la soufflante secondaire.

Cependant, les technologies proposées actuellement pour ce type de module de transmission de puissance ne sont pas satisfaisantes, en particulier d'un point de vue de leur complexité, de leur encombrement et de leur masse.

L'invention propose un perfectionnement permettant d'améliorer tout ou partie de ces inconvénients.

### Résumé de l'invention

L'invention concerne une turbomachine telle que définie à la revendication 1.

Dans la présente demande, les termes « amont » et « aval » font référence à l'écoulement des gaz dans la turbomachine, et en particulier dans les veines de la turbomachine (de l'amont vers l'aval).

L'invention propose ainsi d'utiliser des satellites à triple denture dans le réducteur du module de transmission de puissance dans un tel turbomachine. L'une de ces dentures est engrenée avec le solaire et dédiée à la transmission du couple d'entrée. Une autre de ces dentures est engrenée avec un élément dédié à la transmission d'un des couples de sortie, cet autre élément étant par exemple une couronne ou un autre solaire. Enfin, la dernière denture est engrenée avec un autre élément qui peut soit être dédié à la transmission de l'autre des couples de sortie, soit une couronne fixe. Dans le premier cas, lorsque l'autre élément est dédié à la transmission d'un couple de sortie, c'est le porte-satellites du réducteur qui est fixe. Dans le second cas, lorsque l'autre élément est une couronne fixe, c'est le porte-satellites qui est mobile et est dédié à la transmission de l'autre des couples de sortie.

Il existe une multitude de configurations possibles en fonction notamment des positions des entrée et sorties de couple, des diamètres des dentures, des types de dentures (hélice, droites, chevrons), etc.

Cette solution est compatible d'un réducteur à plusieurs étages. Elle est également compatible d'un réducteur dont le porte-satellites est tournant comme les réducteurs épicycloïdaux ou différentiels. Elle est également compatible d'un réducteur à dentures droites, hélicoïdales ou en chevron. Elle est également compatible d'un réducteur à porte-satellites monobloc ou de type cage et porte-cage.

La turbomachine selon l'invention peut comprendre une ou plusieurs des caractéristiques suivantes, comme défini dans les revendications:
- lesdites première, deuxième et troisième dentures ont des diamètres différents ;
- ladite seconde sortie de couple comprend une portion tubulaire traversée par ladite première sortie de couple ;
- l'élément formant ladite seconde sortie de couple est une couronne ou un autre solaire ;
- lesdites première, deuxième et troisième dentures sont choisies parmi des dentures droites, à hélice ou à chevrons ;
- ladite première denture est située à l'amont et est du type à hélice, la deuxième denture est engrenée avec ladite première sortie de couple et est du type droite, et ladite troisième denture située à l'aval est engrenée avec la couronne fixe et est du type à hélice ;
- ladite première denture est située à l'amont et est du type à chevrons, la deuxième denture est engrenée avec ladite première sortie de couple et est du type droite, et ladite troisième denture située à l'aval est engrenée avec la couronne fixe et est du type à hélice ;
- chacun des satellites comprend une quatrième denture ;
- chacun des satellites comprend deux dentures indépendantes engrenées avec deux dentures indépendantes du solaire et séparées l'une de l'autre par deux autres dentures du satellite.

La turbomachine selon l'invention peut en outre comprendre une ou plusieurs des caractéristiques suivantes, comme défini dans les revendications:
- le module de transmission est situé à l'intérieur d'un carter annulaire qui comprend deux parois annulaires coaxiales, respectivement interne et externe, définissant entre elles ladite veine d'écoulement du flux primaire ;
- la paroi annulaire interne du carter annulaire est reliée à un support annulaire amont d'au moins un palier à roulement de guidage de ladite première sortie de couple, et/ou à un support annulaire aval d'au moins un palier à roulement de guidage de ladite seconde sortie de couple ;
- la paroi annulaire interne du carter annulaire est reliée à ladite couronne fixe qui est située entre lesdits premier et second supports.

### Brève description des figures

D'autres caractéristiques et avantages ressortiront de la description qui suit d'un mode de réalisation non limitatif de l'invention en référence aux dessins annexés sur lesquels :
[Fig.1] la figure 1 est une vue schématique en coupe axiale d'une turbomachine pour un aéronef,
[Fig.2] la figure 2 est une vue partielle en coupe axiale d'un réducteur mécanique,
[Fig.3] la figure 3 est une vue schématique en coupe axiale d'une turbomachine pour un aéronef,
[Fig.4] la figure 4 est une vue schématique en coupe axiale d'une turbomachine pour un aéronef conformément à l'invention,
[Fig.5] la figure 5 est une vue très schématique en coupe axiale d'un module de transmission de puissance de la turbomachine de la figure 4,
[Fig.6] la figure 6 est une vue schématique partielle en coupe axiale du module de transmission de puissance de la turbomachine de la figure 4,
[Fig.7] la figure 7 est une autre vue schématique partielle en coupe axiale du module de transmission de puissance de la turbomachine de la figure 4 et illustre une variante de réalisation des dentures des satellites ;
[Fig.8] la figure 8 est une vue schématique en perspective et en coupe axiale du module de transmission de puissance de la turbomachine de la figure 4 et illustre une autre variante de réalisation des dentures des satellites ;
[Fig.9a-9b] les figures 9a et 9b sont des vues similaires à celle de la figure 5 et illustrent des variantes de réalisation du module de transmission de puissance ;
[Fig.9c-9d] les figures 9c et 9d sont des vues similaires à celle de la figure 5 et illustrent d'autres variantes de réalisation du module de transmission de puissance ;
[Fig.9e-9f] les figures 9e et 9f sont des vues similaires à celle de la figure 5 et illustrent d'autres variantes de réalisation du module de transmission de puissance ;
[Fig.9g-9h] les figures 9g et 9h sont des vues similaires à celle de la figure 5 et illustrent d'autres variantes de réalisation du module de transmission de puissance ;
[Fig.9i-9j] les figures 9i et 9j sont des vues similaires à celle de la figure 5 et illustrent d'autres variantes de réalisation du module de transmission de puissance ;
[Fig.10] la figure 10 est une vue schématique partielle en perspective et en coupe axiale d'un module de transmission de puissance et montre des sens de rotation de ses pièces.

### Description détaillée de l'invention

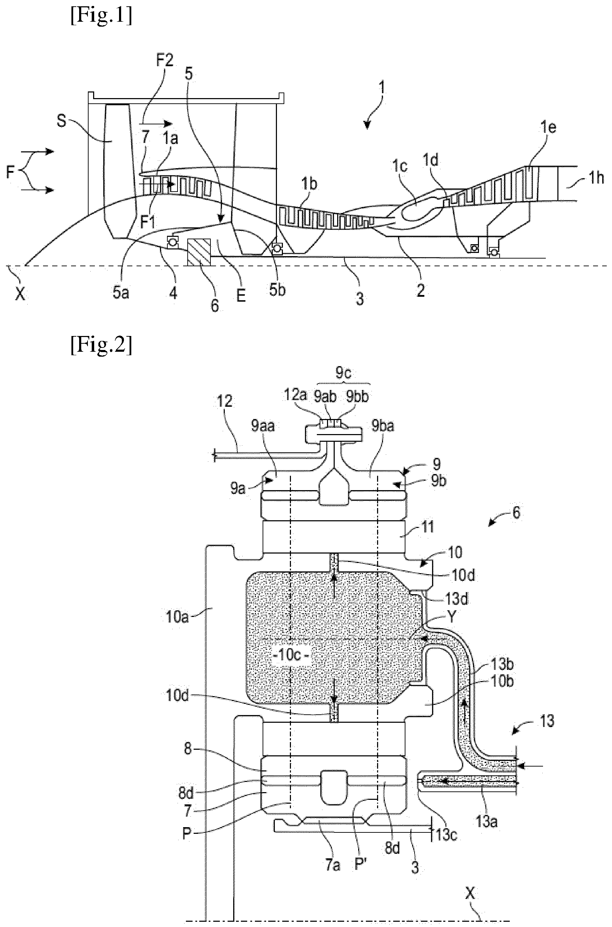

La figure 1 décrit une turbomachine 1 qui comporte, de manière classique, une soufflante S ou hélice de soufflante et un générateur de gaz comprenant un compresseur basse pression 1a, un compresseur haute pression 1b, une chambre annulaire de combustion 1c, une turbine haute pression 1d, une turbine basse pression 1e et une tuyère d'échappement 1h. Le compresseur haute pression 1b et la turbine haute pression 1d sont reliés par un arbre haute pression 2 et forment avec lui un corps haute pression (HP). Le compresseur basse pression 1a et la turbine basse pression 1e sont reliés par un arbre basse pression 3 et forment avec lui un corps basse pression (BP).

La turbomachine 1 est ici à double flux dans la mesure où deux flux d'air, respectivement primaire F1 et secondaire F2, s'écoulent le long de l'axe longitudinal X de la turbomachine. Le flux d'entrée d'air F qui pénètre dans la turbomachine et traverse la soufflante S est divisé en deux en aval de la soufflante par un bec annulaire de séparation 17. Un flux d'air radialement interne s'écoule à l'intérieur du bec 17 et forme le flux primaire F1 qui s'écoule à l'intérieur du générateur de gaz. Un flux d'air radialement externe s'écoule à l'extérieur du bec 17 et forme le flux secondaire F2 qui s'écoule autour du générateur de gaz.

La soufflante S est entraînée par un arbre de soufflante 4 qui est entrainé par l'arbre BP 3 au moyen d'un réducteur 6. Ce réducteur 6 est généralement de type planétaire ou épicycloïdal.

La description qui suit concerne un réducteur du type épicycloïdal, dont le porte-satellites et le solaire sont mobiles en rotation, la couronne du réducteur étant fixe dans le repère du moteur.

Le réducteur 6 est positionné dans la partie amont de la turbomachine. Une structure fixe comportant schématiquement, ici, une partie amont 5a et une partie aval 5b qui compose le carter moteur ou stator 5 est agencée de manière à former une enceinte E entourant le réducteur 6. Cette enceinte E est ici fermée en amont par des joints au niveau d'un palier permettant la traversée de l'arbre de soufflante 4, et en aval par des joints au niveau de la traversée de l'arbre BP 3.

La figure 2 montre un réducteur épicycloïdal 6. En entrée, le réducteur 6 est relié à l'arbre BP 3, par exemple par l'intermédiaire de cannelures internes 7a. Ainsi, l'arbre BP 3 entraîne un pignon planétaire appelé le solaire 7. Classiquement, le solaire 7, dont l'axe de rotation est confondu avec celui de l'axe longitudinal X, entraîne une série de pignons appelés satellites 8, qui sont équirépartis sur le même diamètre autour de l'axe de rotation X. Ce diamètre est égal au double de l'entraxe de fonctionnement entre le solaire 7 et les satellites 8. Le nombre de satellites 8 est généralement défini entre trois et sept pour ce type d'application.

L'ensemble des satellites 8 est maintenu par un châssis appelé porte-satellites 10. Chaque satellite 8 tourne autour de son propre axe Y, et engrène avec la couronne 9.

En sortie nous avons :
▪ Dans cette configuration épicycloïdale, l'ensemble des satellites 8 entraine en rotation le porte-satellite 10 autour de l'axe X de la turbomachine. La couronne est fixée au carter moteur ou stator 5 via un porte-couronne 12 et le porte-satellites 10 est fixé à l'arbre de soufflante 4.
▪ Dans une autre configuration planétaire, l'ensemble des satellites 8 est maintenu par un porte-satellites 10 qui est fixé au carter moteur ou stator 5. Chaque satellite entraine la couronne qui est rapportée à l'arbre de soufflante 4 via un porte-couronne 12.
▪ Dans une autre configuration différentielle, l'ensemble des satellites 8 est maintenu par un porte-satellites 10 qui est relié à un premier arbre de soufflante 5. Chaque satellite entraine la couronne qui est rapportée à un second arbre de soufflante contrarotatif 4 via un porte-couronne 12.

Chaque satellite 8 est monté libre en rotation à l'aide d'un palier 11, par exemple de type roulement ou palier hydrodynamique. Chaque palier 11 est monté sur un des axes 10b du porte-satellites 10 et tous les axes sont positionnés les uns par rapport aux autres à l'aide d'un ou plusieurs châssis structurels 10a du porte-satellites 10. Il existe un nombre d'axes 10b et de paliers 11 égal au nombre de satellites. Pour des raisons de fonctionnement, de montage, de fabrication, de contrôle, de réparation ou de rechange, les axes 10b et le châssis 10a peuvent être séparés en plusieurs pièces.

Pour les mêmes raisons citées précédemment, la denture d'un satellite peut être séparée en plusieurs hélices ou dents présentant chacun un plan médian P, P'. Dans notre exemple, nous détaillons le fonctionnement d'un réducteur dont chaque satellite comprend deux séries de dents en chevron coopérant avec une couronne séparée en deux demi-couronnes:
▪ une demi-couronne amont 9a constituée d'une jante 9aa et d'une demi-bride de fixation 9ab. Sur la jante 9aa se trouve l'hélice avant engrenée avec une hélice de la denture 8d de chaque satellite 8. L'hélice de la denture 8d engrène également avec celle du solaire 7.
▪ une demi-couronne aval 9b constituée d'une jante 9ba et d'une demi-bride de fixation 9bb. Sur la jante 9ba se trouve l'hélice arrière engrenée avec une hélice de la denture 8d de chaque satellite 8. L'hélice de la denture 8d engrène également avec celle du solaire 7.

Si les largeurs d'hélice varient entre le solaire 7, les satellites 8 et la couronne 9 à cause des recouvrements de denture, elles sont toutes centrées sur un plan médian P pour les dents amont et sur un autre plan médian P' pour les dents aval.

La figure 2 illustre ainsi le cas d'un réducteur à simple étage d'engrènement, c'est-à-dire qu'une même denture 8d de chaque satellite 8 coopère à la fois avec le solaire 7 et la couronne 9. Même si la denture 8d comprend deux séries de dents, ces dents ont le même diamètre moyen et forment une seule et même denture appelée chevron.

La demi-bride de fixation 9ab de la demi-couronne amont 9a et la demi-bride de fixation 9bb de la demi-couronne aval 9b forment la bride de fixation 9c de la couronne. La couronne 9 est fixée à un porte-couronne en assemblant la bride de fixation 9c de la couronne et la bride de fixation 12a du porte-couronne à l'aide d'un montage boulonné par exemple.

Les flèches de la figure 2 décrivent l'acheminement de l'huile dans le réducteur 6. L'huile arrive dans le réducteur 6 depuis la partie stator 5 dans un distributeur 13 par différents moyens qui ne seront pas précisés dans cette vue car ils sont spécifiques à un ou plusieurs types d'architecture. Le distributeur 13 comprend des injecteurs 13a et des bras 13b. Les injecteurs 13a ont pour fonction de lubrifier les dentures et les bras 13b ont pour fonction de lubrifier les paliers. L'huile est amenée vers l'injecteur 13a pour ressortir par l'extrémité 13c afin de lubrifier les dentures. L'huile est également amenée vers le bras 13b et circule via la bouche d'alimentation 13d du palier. L'huile circule ensuite à travers l'axe dans une ou des zones tampons 10c pour ensuite ressortir par les orifices 10d afin de lubrifier les paliers des satellites.

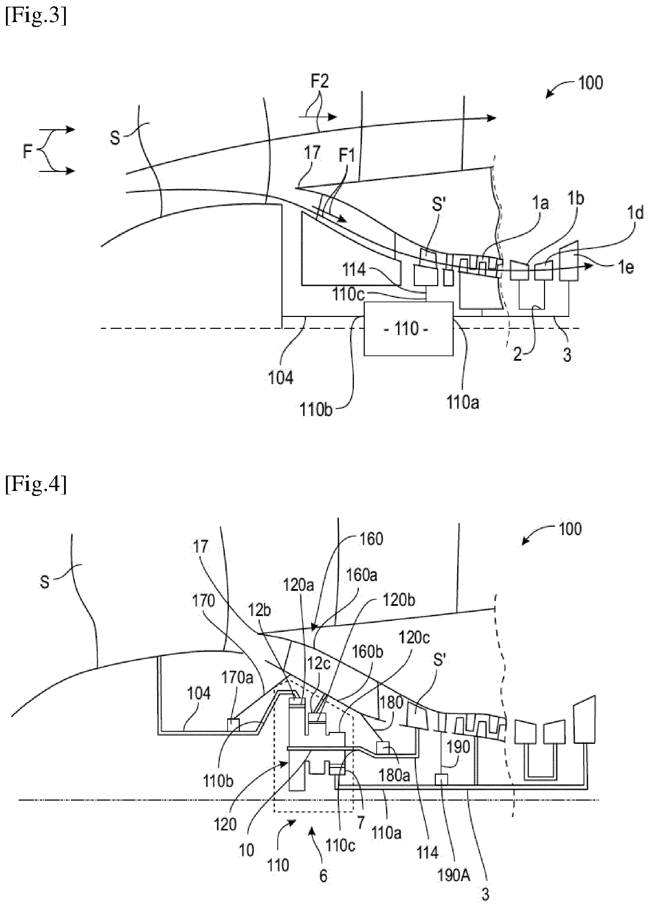

La figure 3 montre une turbomachine d'aéronef 100 à double flux.

Les références utilisées dans la figure 1 sont utilisées dans la figure 3 pour désigner les mêmes éléments.

Le flux d'entrée d'air F qui pénètre dans la turbomachine 100 et traverse la soufflante S, qui est ici une soufflante principale, est divisé en deux en aval de la soufflante S par un bec annulaire de séparation 17. Un flux d'air radialement interne s'écoule à l'intérieur du bec 17 et forme le flux primaire F1. Un flux d'air radialement externe s'écoule à l'extérieur du bec 17 et forme le flux secondaire F2 qui s'écoule autour du générateur de gaz.

La turbomachine 1 comprend ici une soufflante secondaire S' qui comprend une hélice ou roue aubagée située dans la veine d'écoulement du flux primaire F1.

La turbomachine 100 comprend un module de transmission de puissance 110 comportant une entrée de couple 110a relié à l'arbre basse pression 3, une première sortie de couple 110b reliée à l'arbre principal 104 d'entraînement du rotor et de l'hélice de la soufflante principale S, et une seconde sortie de couple 110c reliée à l'arbre secondaire 114 d'entraînement du rotor et de l'hélice de la soufflante secondaire S'.

La figure 4 illustre une turbomachine à double flux 100 conformément à un mode de réalisation de l'invention.

Le module de transmission de puissance 110 de cette turbomachine 100 comprend un réducteur 6 similaire à celui des figures 1 et 2, et comprend des satellites 120 à trois dentures 120a, 120b, 120c indépendantes (un seul satellite étant visible à la figure 4).

Le réducteur 6 comprend l'entrée de couple 110a et les deux sorties de couple 110b, 110c.

L'entrée de couple 110a est formée par le solaire 7 du réducteur 6 qui est accouplé à l'arbre basse pression 3 et qui est engrené avec l'une des dentures (120c dans l'exemple de la figure 4) de chacun des satellites 120. Comme cela sera expliqué dans le détail dans ce qui suit, il existe une multitude de configurations possibles pour l'engrènement des dentures 120a, 120b, 120c des satellites 120. Les figures 4 à 8 et 9a à 9j illustrent plusieurs configurations possibles et plusieurs variantes d'une même configuration, parmi la multitude de configurations possibles (plus de 1000). Comme cela est visible aux figures 4 à 8 notamment, les diamètres des dentures 120a, 120b, 120c peuvent être différents. Les dentures 120a, 120b, 120c peuvent être agencées de manière quelconque ou en fonction de leurs diamètres, par exemple du plus petit au plus grand diamètre de l'amont vers l'aval, ou du grand ou plus petit diamètre de l'amont vers l'aval. Chacune des dentures peut être engrenée avec une couronne ou un solaire.

L'intérêt de changer les engrènements de position est que cela permet d'équilibrer les efforts dans les satellites 120a, 120b, 120c et de minimiser les moments résiduels.

De manière générale, on appelle « denture amont », la denture située à l'amont, « denture aval », la denture située à l'aval, et « denture intermédiaire », la denture située entre les dentures amont et aval.

Dans l'exemple représenté à la figure 4, la denture amont 120a de plus grand diamètre est engrenée avec une première couronne 12b formant la première sortie de couple 110b et reliée à l'arbre principal 104. Cet arbre principal 104 est guidé en rotation par au moins un palier à roulement 170a qui est porté par un support annulaire amont 170.

La denture aval 120c de plus petit diamètre est engrenée avec le solaire 7 qui forme l'entrée de couple 110a et est reliée à l'arbre basse pression 3.

La denture intermédiaire 120b est engrenée avec une seconde couronne 12c qui est fixe.

Le porte-satellites 10 du réducteur 6 est mobile en rotation et forme la seconde sortie de couple 110c en étant reliée à l'arbre secondaire 114. Cet arbre secondaire 114 est guidé en rotation par au moins un palier à roulement 180a qui est porté par un support annulaire aval 180.

Le module de transmission 110 est situé à l'intérieur d'un carter annulaire 160 qui comprend deux parois annulaires 160a, 160b coaxiales définissant entre elles la veine d'écoulement du flux primaire F1.

Les supports annulaires 170, 180 sont fixés au carter 160. Les paliers 170a, 180a sont respectivement situés en amont et en aval du module 110. La couronne 12c est située entre les supports 170, 180.

L'arbre basse pression 3 est guidé en rotation par au moins un palier à roulement 190a qui est porté par un autre support annulaire 190.

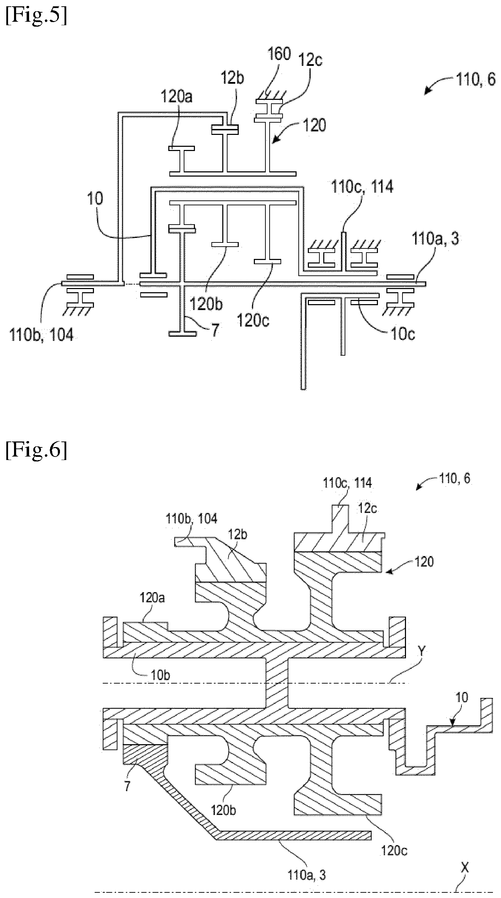

Dans l'exemple représenté à la figure 5, la denture amont 120a de plus petit diamètre est engrenée avec le solaire 7 qui forme l'entrée de couple 110a et est reliée à l'arbre basse pression 3. Une extrémité amont de l'arbre basse pression 3 ou du solaire 7 peut être centré et guidé à l'intérieur du porte-satellites 10, à l'amont du réducteur 6.

Le porte-satellites 10 est mobile en rotation et forme la seconde sortie de couple 110c en étant reliée à l'arbre secondaire 114. Le porte-satellites 10 comprend une portion tubulaire aval 10e traversée par l'arbre basse pression 3. Les paliers de guidage (non représentés) du porte-satellites 10 ou de l'arbre secondaire 114 peuvent être portés par le carter 160, comme évoqué dans ce qui précède.

La denture aval 120c de plus grand diamètre est engrenée avec une couronne fixe 12c relié au carter 160.

La denture intermédiaire 120b est engrenée avec la couronne 12b qui est mobile en rotation et forme la première sortie de couple 110b en étant reliée à l'arbre principal 104. Le palier de guidage (non représenté) de cet arbre principal 104 peut être porté par le carter 160, comme évoqué dans ce qui précède.

La figure 6 est une vue moins schématique du réducteur 6 de la figure 5. Les types des dentures peuvent être identiques ou différents. Par exemple, les dentures 120a, 120b, 120c peuvent être toutes droites, à hélice ou en chevron. En variante, toutes les configurations et associations sont possibles.

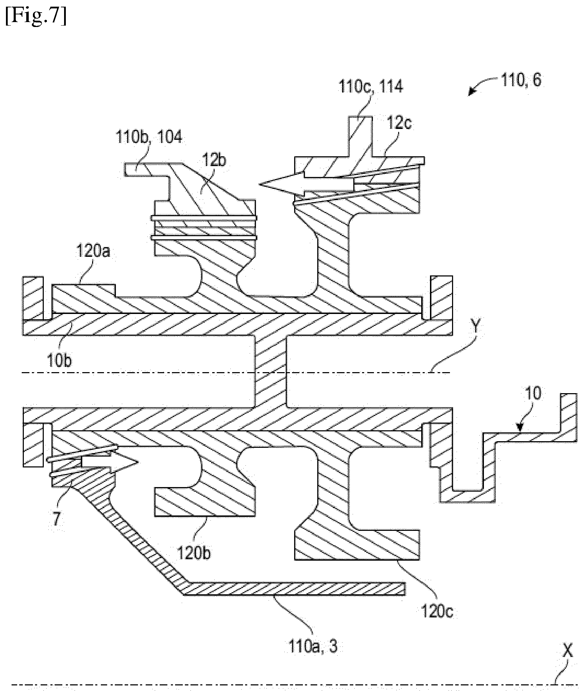

Dans le cas de la figure 7 par exemple, la denture amont 120a est du type à hélice, la denture intermédiaire 120b est du type droite, et la denture aval 120c est du type à hélice. Avec un angle d'hélice prédéfinie, il est possible avec une telle solution d'annuler les efforts axiaux sur les satellites 120.

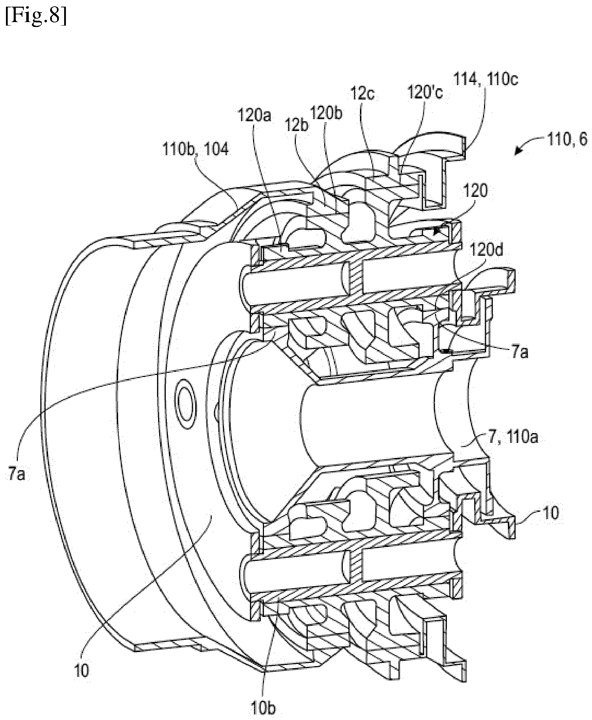

Dans le cas de la figure 8, la denture amont 120a est du type à chevrons, la denture intermédiaire 120b est du type droite, et la denture aval 120'c est du type à hélice. Chacun des satellites 120 comprend en outre une quatrième denture 120d engrenée avec le solaire 7. Les dentures 120b, 120'c sont situées entre les dentures 120a, 120d et le solaire 7 comprend deux dentures 7a indépendantes et espacées axialement pour l'engrènement avec les dentures 120a, 120d.

Cette dernière solution est intéressante car elle permet de conserver le sens de rotation sur les deux sorties de couple 110b, 110c. Contrairement à une solution avec une sortie sur un second solaire, cette solution est appropriée pour un taux de réduction supérieur à 1,9.

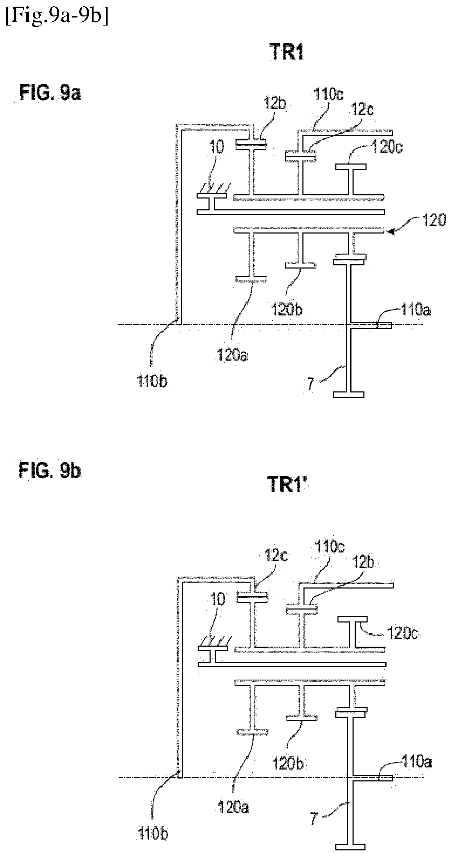

Dans la configuration TR1 de la figure 9a, la denture aval 120c de plus petit diamètre est engrenée avec le solaire 7. La denture amont de plus grand diamètre est engrenée avec la couronne 12b qui forme la première sortie de couple 110b, et la denture intermédiaire 120b est engrenée avec la couronne 12c qui forme la seconde sortie de couple 110c. Le porte-satellites 10 est fixe.

La configuration TR1' de la figure 9b est proche de la configuration TR1. La différence concerne la denture amont 120a qui est engrenée avec la couronne 12c qui forme la seconde sortie de couple 110c, et la denture intermédiaire 120b est engrenée avec la couronne 12b qui forme la première sortie de couple 110b.

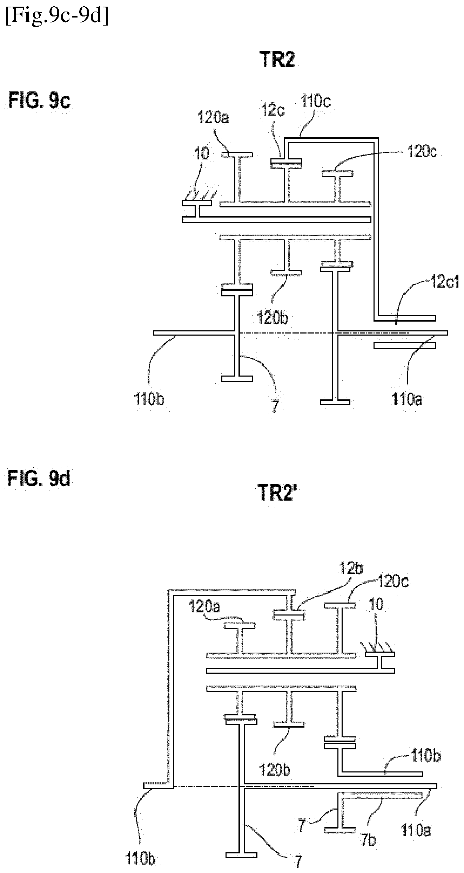

Dans la configuration TR2 de la figure 9c, la denture aval 120c de plus petit diamètre est engrenée avec le solaire 7. La denture amont 120a de plus grand diamètre est engrenée avec un autre solaire 7' qui forme la première sortie de couple 110b, et la denture intermédiaire 120b est engrenée avec la couronne 12c qui forme la seconde sortie de couple 110c et qui comprend une portion tubulaire 12c1 traversée par le solaire 7 ou l'arbre basse pression 3. Le porte-satellites 10 est fixe.

Dans la configuration TR2' de la figure 9d, la denture amont 120a de plus petit diamètre est engrenée avec le solaire 7. La denture aval 120c de plus grand diamètre est engrenée avec un autre solaire 7' qui comprend une portion tubulaire 7b traversée par le solaire 7 ou l'arbre basse pression 3 et qui forme la seconde sortie de couple 110c. La denture intermédiaire 120b est engrenée avec la couronne 12b qui forme la première sortie de couple 110b. Le porte-satellites 10 est fixe.

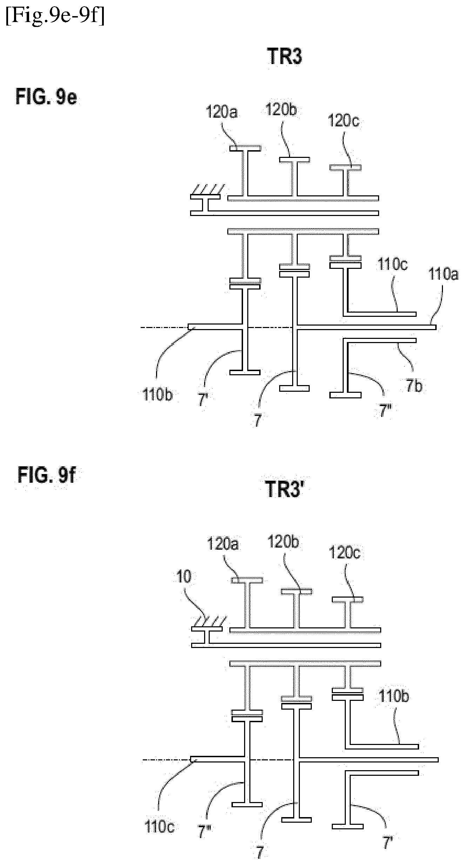

Dans la configuration TR3 de la figure 9e, la denture intermédiaire 120b est engrenée avec le solaire 7. La denture amont 120a de plus grand diamètre est engrenée avec un autre solaire 7' qui forme la première sortie de couple 110b. La denture aval 120c de plus petit diamètre est engrenée avec un autre solaire 7" qui comprend une portion tubulaire 7b traversée par le solaire 7 ou l'arbre basse pression 3 et qui forme la seconde sortie de couple 110c. Le porte-satellites 10 est fixe.

La configuration TR3' de la figure 9f est proche de la configuration TR3. La différence concerne la denture amont 120a qui est engrenée avec le solaire 7" qui forme la seconde sortie de couple 110c, et la denture aval 120c est engrenée avec le solaire 7' qui forme la première sortie de couple 110b.

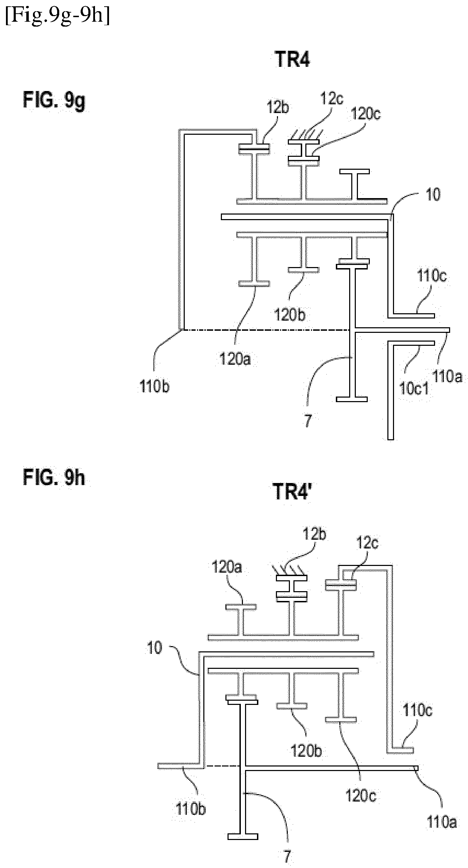

Dans la configuration TR4 de la figure 9g, la denture aval 120c de plus petit diamètre est engrenée avec le solaire 7. La denture amont 120a de plus grand diamètre est engrenée avec la couronne 12b qui forme la première sortie de couple 110b. La denture intermédiaire 120b est engrenée avec la couronne 12c fixe. Le porte-satellites 10 est mobile et comprend une portion tubulaire 10e traversée par le solaire 7 ou l'arbre basse pression 3 et forme la seconde sortie de couple 110c.

Dans la configuration TR4' de la figure 9h, la denture amont 120a de plus petit diamètre est engrenée avec le solaire 7. La denture aval 120c de plus grand diamètre est engrenée avec la couronne 12c qui forme la seconde sortie de couple 110c. La denture intermédiaire 120b est engrenée avec la couronne 12b fixe. Le porte-satellites 10 est mobile et forme la première sortie de couple 110b.

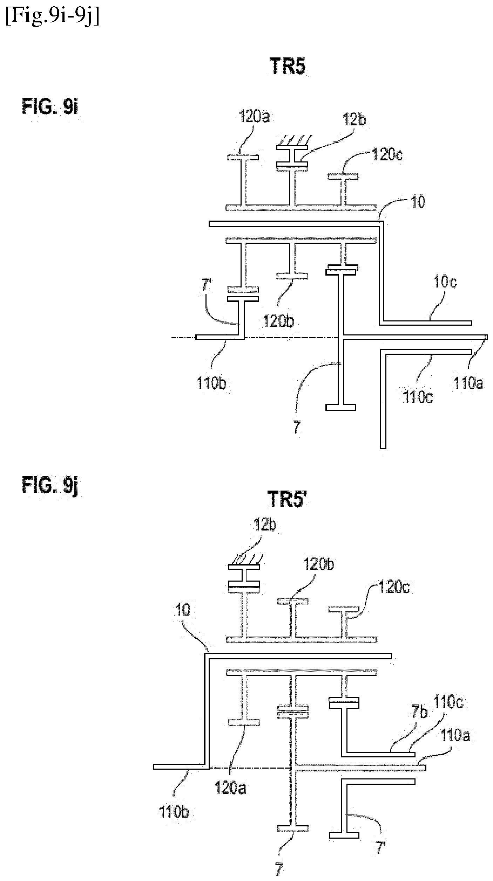

Dans la configuration TR5 de la figure 9i, la denture aval 120c de plus petit diamètre est engrenée avec le solaire 7. La denture amont 120a de plus grand diamètre est engrenée avec un autre solaire 7' qui forme la première sortie de couple 110b. La denture intermédiaire 120b est engrenée avec la couronne 12b fixe. Le porte-satellites 10 est mobile et comprend une portion tubulaire 10e traversée par le solaire 7 ou l'arbre basse pression 3 et forme la seconde sortie de couple 110c.

Dans la configuration TR5' de la figure 9j, la denture intermédiaire 120b est engrenée avec le solaire 7. La denture amont 120a de plus grand diamètre est engrenée avec la couronne 12b fixe. La denture aval 120c de plus petit diamètre est engrenée avec un autre solaire 7' qui comprend une portion tubulaire 7b traversée par le solaire 7 ou l'arbre basse pression 3 et forme la seconde sortie de couple 110c. Le porte-satellites 10 est mobile et forme la première sortie de couple 110b.

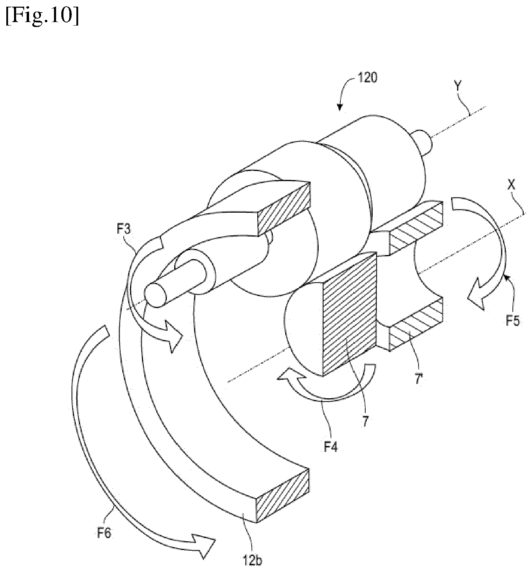

La figure 10 montre les sens de rotation des pièces du réducteur 6 du module 110 de transmission de puissance. Un seul satellite 120 est représenté et la flèche F3 montre son sens de rotation autour de son axe Y. Les solaires 7, 7' tournent dans les mêmes sens de rotation F4, F5 autour de l'axe longitudinal X du réducteur 6. La couronne 12b tourne dans un sens de rotation contraire autour de cet axe X.

Toutes ces solutions permettent d'obtenir deux sorties à partir d'une entrée avec des rapports de réduction constants. En fonction du rapport de réduction et des sens de rotation souhaité, une ou plusieurs configurations peuvent répondre au besoin. Par exemple, si on souhaite un rapport de 1 / 1.5 / 8 (c'est-à-dire une entrée de couple 110a à 1, une première sortie de couple 110b à 1:1.5 et une seconde sortie de couple 110c à 1:8) alors l'une des solutions à privilégier est de type TR4.

Le module 110 de transmission de puissance de la turbomachine selon l'invention permet ainsi, à partir de la vitesse rapide transmise par l'arbre basse pression 3, de fournir deux sorties de couple avec deux vitesses différentes, tout en minimisant la masse et l'encombrement du réducteur 6 de ce module. L'invention est particulièrement adaptée à des rapports de réduction faibles, par exemple inférieurs à deux, et à des puissances de l'ordre du mégawatt.

## Revendications

1. Turbomachine (100) d'aéronef, comprenant :
+ un générateur de gaz équipé d'une turbine (1e) comportant un arbre de turbine (3) présentant un axe de rotation (X), et
+ une hélice de soufflante principale (S) entraînée en rotation par un arbre principal (104), cette hélice étant située en amont d'un premier bec annulaire (17) de séparation de deux veines annulaires d'écoulement respectif d'un flux primaire (F1) interne et d'un flux secondaire (F2) externe,
+ une hélice de soufflante secondaire (S') entraînée en rotation par un arbre secondaire (114), cette hélice étant située dans la veine d'écoulement du flux primaire (F1), et
+ un module de transmission de puissance (110), comportant
- une entrée de couple (110a) configurée pour être reliée à un arbre de turbine (3),
- une première sortie de couple (110b) accouplé à l'arbre principal (104), et
- une seconde sortie de couple (110c) accouplé à l'arbre secondaire (114), ce module de transmission de puissance (110) comportant un réducteur mécanique (6) comprenant un solaire (7) formant ladite entrée de couple (110a), et des satellites (120) portés par un porte-satellites (10), chacun de ces satellites (120) comportant une première denture engrenée avec le solaire (7),
chacun des satellites (120) comprenant au moins trois dentures (120a, 120b, 120c) indépendantes et comportant :
- une deuxième denture engrenée avec un élément formant l'une des première et seconde sorties de couple (110b, 110c), et
- une troisième denture engrenée avec un autre élément, cet autre élément formant l'autre des première et seconde sorties de couple (110b, 110c) lorsque ledit porte-satellites (10) est fixe, ou cet autre élément étant une couronne (12b, 12c) fixe lorsque ledit porte-satellites (10) est mobile et forme l'autre des première et seconde sorties de couple (110b, 110c).

2. Turbomachine (100) selon la revendication 1, dans laquelle lesdites première, deuxième et troisième dentures (120a, 120b, 120c) ont des diamètres différents.

3. Turbomachine (100) selon la revendication 1 ou 2, dans laquelle ladite seconde sortie de couple (110c) comprend une portion tubulaire traversée par ladite première sortie de couple (110b).

4. Turbomachine (100) selon l'une des revendications précédentes, dans laquelle l'élément formant ladite seconde sortie de couple est une couronne (12b, 12c) ou un autre solaire (7', 7").

5. Turbomachine (100) selon l'une des revendications précédentes, dans laquelle lesdites première, deuxième et troisième dentures (120a, 120b, 120c) sont choisies parmi des dentures droites, à hélice ou à chevrons.

6. Turbomachine (100) selon la revendication 5, dans laquelle ladite première denture (120a) est située à l'amont et est du type à hélice, la deuxième denture (120b) est engrenée avec ladite première sortie de couple (110b) et est du type droite, et ladite troisième denture (120c) située à l'aval est engrenée avec la couronne (12b, 12c) fixe et est du type à hélice.

7. Turbomachine (100) selon la revendication 5, dans laquelle ladite première denture (120a) est située à l'amont et est du type à chevrons, la deuxième denture (120b) est engrenée avec ladite première sortie de couple (110b) et est du type droite, et ladite troisième denture (120c) située à l'aval est engrenée avec la couronne fixe (12b, 12c) et est du type à hélice.

8. Turbomachine (100) d'aéronef selon l'une des revendications précédentes, dans laquelle chacun des satellites comprend une quatrième denture (120d).

9. Turbomachine (100) d'aéronef selon l'une des revendications précédentes, dans laquelle chacun des satellites (120) comprend deux dentures indépendantes (120a, 120d) engrenées avec deux dentures (7a) indépendantes du solaire (7) et séparées l'une de l'autre par deux autres dentures (120b, 102'c) du satellite.

10. Turbomachine (100) d'aéronef selon l'une des revendications précédentes, dans laquelle le module de transmission (110) est situé à l'intérieur d'un carter annulaire (160) qui comprend deux parois annulaires coaxiales, respectivement interne (160b) et externe (160a), définissant entre elles ladite veine d'écoulement du flux primaire.

11. Turbomachine (100) d'aéronef selon la revendication 10, dans laquelle la paroi annulaire interne (160b) du carter annulaire (160) est reliée à un support annulaire amont (170) d'au moins un palier (170a) à roulement de guidage de ladite première sortie de couple (110b), et/ou à un support annulaire aval (180) d'au moins un palier (180a) à roulement de guidage de ladite seconde sortie de couple (110c).

12. Turbomachine (100) d'aéronef selon la revendication 11, dans laquelle la paroi annulaire interne (160b) du carter annulaire (160) est reliée à ladite couronne fixe (12c) qui est située entre lesdits premier et second supports (170, 180).

## Patentansprüche

1. Turbotriebwerk (100) eines Luftfahrzeugs, umfassend:
- einen Gasgenerator, der mit einer Turbine (1e) ausgerüstet ist, welche eine Turbinenwelle (3) umfasst, die eine Drehachse (X) aufweist, und
- eine Hauptgebläseluftschraube (S), die durch eine Hauptwelle (104) in Drehung angetrieben wird, wobei sich diese Luftschraube stromaufwärts einer ersten ringförmigen Tülle (17) zum Trennen zweier jeweiliger ringförmiger Strömungsbahnen eines inneren Hauptstromes (F1) und eines äußeren Sekundärstromes (F2) befindet,
- eine Sekundärgebläseluftschraube (S'), die durch eine Sekundärwelle (114) in Drehung angetrieben wird, wobei sich diese Luftschraube in der Strömungsbahn des Hauptstromes (F1) befindet, und
- ein Leistungsübertragungsmodul (110), umfassend
- einen Drehmomenteingang (110a), konfiguriert, um mit einer Turbinenwelle (3) verbunden zu werden,
- einen ersten Drehmomentausgang (110b), gekoppelt mit der Hauptwelle (104), und
- einen zweiten Drehmomentausgang (110c), gekoppelt mit der Sekundärwelle (114), wobei dieses Leistungsübertragungsmodul (110) ein mechanisches Getriebe (6) umfasst, das ein Sonnenrad (7), das den Drehmomenteingang (110a) bildet, und Satelliten (120) umfasst, die von einem Satellitenträger (10) getragen werden, wobei jeder dieser Satelliten (120) eine erste Verzahnung in Eingriff mit dem Sonnenrad (7) umfasst,
wobei jeder der Satelliten (120) mindestens drei unabhängige Verzahnungen (120a, 120b, 120c) beinhaltet und umfassend:
- eine zweite Verzahnung in Eingriff mit einem Element, das einen des ersten und zweiten Drehmomentausgangs (110b, 110c) bildet, und
- eine dritte Verzahnung in Eingriff mit einem anderen Element, wobei dieses andere Element den anderen des ersten und zweiten Drehmomentausgangs (110b, 110c) bildet, wenn der Satellitenträger (10) fest ist, oder dieses andere Element eine feste Krone (12b, 12c) ist, wenn der Satellitenträger (10) beweglich ist und den anderen des ersten und zweiten Drehmomentausgangs (110b, 110c) bildet.

2. Turbotriebwerk (100) nach Anspruch 1, wobei die erste, zweite und dritte Verzahnung (120a, 120b, 120c) unterschiedliche Durchmesser aufweisen.

3. Turbotriebwerk (100) nach Anspruch 1 oder 2, wobei der zweite Drehmomentausgang (110c) einen röhrenförmigen Abschnitt umfasst, der von dem ersten Drehmomentausgang (110b) durchquert wird.

4. Turbotriebwerk (100) nach einem der vorstehenden Ansprüche, wobei das Element, das den zweiten Drehmomentausgang bildet, eine Krone (12b, 12c) oder ein anderes Sonnenrad (7', 7") ist.

5. Turbotriebwerk (100) nach einem der vorstehenden Ansprüche, wobei die erste, zweite und dritte Verzahnung (120a, 120b, 120c) ausgewählt sind aus Gerad-, Wendel- oder Fischgrätenverzahnungen.

6. Turbotriebwerk (100) nach Anspruch 5, wobei die erste Verzahnung (120a) sich stromaufwärts befindet und vom Wendeltyp ist, die zweite Verzahnung (120b) mit dem ersten Drehmomentausgang (110b) in Eingriff vorliegt und vom geraden Typ ist, und die dritte Verzahnung (120c) sich stromabwärts befindet und mit der festen Krone (12b, 12c) in Eingriff vorliegt und vom Wendeltyp ist.

7. Turbotriebwerk (100) nach Anspruch 5, wobei die erste Verzahnung (120a) sich stromaufwärts befindet und vom Fischgrätentyp ist, die zweite Verzahnung (120b) mit dem ersten Drehmomentausgang (110b) in Eingriff vorliegt und vom geraden Typ ist, und die dritte Verzahnung (120c) sich stromabwärts befindet und mit der festen Krone (12b, 12c) in Eingriff vorliegt und vom Wendeltyp ist.

8. Turbotriebwerk (100) eines Luftfahrzeugs nach einem der vorstehenden Ansprüche, wobei jeder der Satelliten eine vierte Verzahnung (120d) umfasst.

9. Turbotriebwerk (100) eines Luftfahrzeugs nach einem der vorstehenden Ansprüche, wobei jeder der Satelliten (120) zwei unabhängige Verzahnungen (120a, 120d) umfasst, die mit zwei unabhängigen Verzahnungen (7a) des Sonnenrads (7) in Eingriff vorliegen und voneinander durch zwei andere Verzahnungen (120b, 102'c) des Satelliten getrennt sind.

10. Turbotriebwerk (100) eines Luftfahrzeugs nach einem der vorstehenden Ansprüche, wobei sich das Übertragungsmodul (110) im Inneren eines ringförmigen Gehäuses (160) befindet, das zwei koaxiale ringförmige Wände, jeweils innen (160b) und außen (160a), umfasst, die zwischen sich die Strömungsbahn des Hauptstroms (F1) definieren.

11. Turbotriebwerk (100) eines Luftfahrzeugs nach Anspruch 10, wobei die innere ringförmige Wand (160b) des ringförmigen Gehäuses (160) mit einem stromaufwärtigen ringförmigen Träger (170) mindestens eines Lagers (170a) mit Führungslager des ersten Drehmomentausgangs (110b), und/oder einem stromabwärtigen ringförmigen Träger (180) mindestens eines Lagers (180a) mit Führungslager des zweiten Drehmomentausgangs (110c) verbunden ist.

12. Turbotriebwerk (100) nach Anspruch 11, wobei die innere ringförmige Wand (160b) des ringförmigen Gehäuses (160) mit der festen Krone (12c) verbunden ist, die sich zwischen dem ersten und zweiten Träger (170, 180) befindet.

## Claims

1. An aircraft turbomachine (100), comprising:
- a gas generator equipped with a turbine (1e) comprising a turbine shaft (3) with an axis of rotation (X), and
- a main fan propeller (S) driven in rotation by a main shaft (104), this propeller being located upstream of a first annular splitter nose (17) for separating two annular flow ducts for an internal primary flow (F1) and an external secondary flow (F2) respectively,
- a secondary fan propeller (S') driven in rotation by a secondary shaft (114), this propeller being located in the flow duct for the primary flow (F1), and
- a power transmission module (110), comprising
∘ a torque input (110a) configured to be connected to a turbine shaft (3),
∘ a first torque output (110b) coupled to the main shaft (104), and
∘ a second torque output (110c) coupled to the secondary shaft (114),
this power transmission module (110) comprising a mechanical reducer (6) comprising a sun gear (7) forming said torque input (110a), and planet gears (120) carried by a planet carrier (10), each of these planet gears (120) comprising a first toothing meshed with the sun gear (7),
each of the planet gears (120) comprising at least three independent toothings (120a, 120b, 120c) and comprising:
- a second toothing meshed with an element forming one of the first and second torque outputs (110b, 110c), and
- a third toothing meshed with another element, said other element forming the other of the first and second torque outputs (110b, 110c) when said planet carrier (10) is stationary, or that other element being a stationary ring gear (12b, 12c) when said planet carrier (10) is movable and forms the other of the first and second torque outputs (110b, 110c).

2. The turbomachine (100) of claim 1, wherein said first, second and third toothings (120a, 120b, 120c) have different diameters.

3. The turbomachine (100) of claim 1 or 2, wherein said second torque output (110c) comprises a tubular segment through which said first torque output (110b) passes.

4. The turbomachine (100) according to any of the preceding claims, wherein the element forming said second torque output is a ring gear (12b, 12c) or another sun gear (7', 7").

5. The turbomachine (100) according to any of the preceding claims, wherein said first, second, and third toothings (120a, 120b, 120c) are selected from straight, helix, or herringbone toothings.

6. The turbomachine (100) of claim 5, wherein said first toothing (120a) is located upstream and is of the helix type, the second toothing (120b) is meshed with said first torque output (110b) and is of the straight type, and said third toothing (120c) located downstream is meshed with the stationary ring gear (12b, 12c) and is of the helix type.

7. The turbomachine (100) of claim 5, wherein said first toothing (120a) is located upstream and is of the herringbone type, the second toothing (120b) is meshed with said first torque output (110b) and is of the straight type, and said third toothing (120c) located downstream is meshed with the stationary ring gear (12b, 12c) and is of the helix type.

8. The aircraft turbomachine (100) of any of the preceding claims, wherein each of the planet gears comprises a fourth toothing (120d).

9. The aircraft turbomachine (100) according to any of the preceding claims, wherein each of the planet gears (120) comprises two independent toothings (120a, 120d) meshed with two independent toothings (7a) of the sun gear (7) and separated from each other by two other toothings (120b, 102'c) of the planet gear.

10. The aircraft turbomachine (100) according to one of the preceding claims, wherein the transmission module (110) is located inside an annular casing (160) which comprises two coaxial annular walls, respectively internal (160b) and external (160a), defining between them said flow duct for the primary flow.

11. The aircraft turbomachine (100) of claim 10, wherein the internal annular wall (160b) of the annular casing (160) is connected to an upstream annular support (170) of at least one rolling bearing (170a) for guiding said first torque output (110b), and/or to a downstream annular support (180) of at least one rolling bearing (180a) for guiding said second torque output (110c).

12. The aircraft turbomachine (100) of claim 11, wherein the internal annular wall (160b) of the annular casing (160) is connected to said stationary ring gear (12c) which is located between said first and second supports (170, 180).
